# EUROPÄISCHE PATENTSCHRIFT

(11) **EP 3 802 410 B1**
(45) Veröffentlichungstag und Bekanntmachung des Hinweises auf die Patenterteilung: **16.08.2023**
(21) Anmeldenummer: 19729279.0
(22) Anmeldetag: 07.06.2019
(51) Int. Cl.: C01B 3/14, C01B 3/16, C01B 3/48, C10K 3/04, B01J 8/02

(54) **VERFAHREN UND VORRICHTUNG ZUR DURCHFÜHRUNG EINER WASSERGAS-SHIFT-REAKTION**
METHOD AND DEVICE FOR CARRYING OUT A WATER-GAS SHIFT REACTOR
PROCÉDÉ ET DISPOSITIF DE RÉALISATION D'UNE CONVERSION DU GAZ À L'EAU

(30) Priorität: 08.06.2018 DE 102018113743
(43) Veröffentlichungstag der Anmeldung: 14.04.2021
(73) Patentinhaber: thyssenkrupp Industrial Solutions AG, 45143 Essen (DE); thyssenkrupp AG, 45143 Essen (DE)
(72) Erfinder: EL HAWARY, Tarek, 59439 Holzwickede (DE); KLEYENSTEIBER, Alexander, 58739 Wickede (Ruhr) (DE)
(74) Vertreter: thyssenkrupp Intellectual Property GmbH
(86) Internationale Anmeldenummer: PCT/EP2019/064910
(87) Internationale Veröffentlichungsnummer: WO 2019/234208

(56) Entgegenhaltungen:
- WO-A1-2015/131818
- CN-B- 103 508 416
- US-A1- 2009 221 720
- US-A1- 2011 104 037
- US-A1- 2014 264 178
- US-A1- 2016 264 411

## Beschreibung

### Stand der Technik

Die vorliegende Erfindung betrifft ein Verfahren zur Durchführung der Wassergas-Shift-Reaktion bei dem Syntheserohgas in Gegenwart von Wasserdampf und mindestens einem Wassergas-Shift-Katalysator unter Umwandlung von Kohlenmonoxid in Kohlendioxid und unter Bildung von Wasserstoff umgesetzt wird, wobei das Syntheserohgas zunächst durch mindestens eine Einheit zur Hochtemperatur-CO-Konvertierung und anschließend stromabwärts von dieser durch mindestens eine Einheit zur Niedertemperatur-CO-Konvertierung geleitet wird.

Synthesegas wird in industriellem Maßstab regelmäßig nach dem sogenannten Steam Reforming-Verfahren aus gasförmigen Kohlenwasserstoffen und Wasserdampf bei hohen Drücken in Gegenwart eines Katalysators hergestellt. Als Quelle für diese Kohlenwasserstoffe greift man regelmäßig auf Erdgas zurück, das im Allgemeinen mehr als 75 % Methan enthält. Neben Wasserstoff enthält Synthesegas als weiteres maßgebliches Reaktionsprodukt Kohlenmonoxid. Kohlenmonoxid kann als Ligand vielfach gut an Metallzentren unter Ausbildung von Komplexverbindungen koordinieren und wirkt daher häufig als Katalysatorgift, insbesondere auch bei der Ammoniak-Herstellung. Es ist daher aus dem Synthesegasrohgemisch vor Weiterverwendung des Wasserstoffs, beispielsweise bei der Ammoniak-Synthese, zu entfernen. Hierfür greift man häufig auf die Wassergas-Shift-Reaktion zurück, bei der Kohlenmonoxid mit Wasserdampf in Gegenwart eines geeigneten Katalysators in Kohlendioxid und Wasserstoff umgesetzt wird. Anders als Kohlenmonoxid wirkt Kohlendioxid nicht als katalysatorvergiftender Koordinationsligand und kann zudem wesentlich leichter aus dem Produktgasgemisch entfernt werden. Die Umwandlung von Kohlenmonoxid in Kohlendioxid bei der Wassergas-Shiftreaktion ist stark exotherm,

Soll der aus dem Synthesegas entstammende Wasserstoff für die Ammoniak-Synthese eingesetzt werden, hat einerseits der Anteil an Kohlenmonoxid äußerst gering und vorzugsweise komplett entfernt zu sein und andererseits der Anteil an Methan gering auszufallen. Denn die Wassergas-Shift-Reaktion wird regelmäßig an dem Syntheserohgasgemisch vorgenommen, das nachfolgend bei der Ammoniak-Synthese zum Einsatz kommt.

### Theorie der Wassergas-Shift-Reaktion

Bei der Erzeugung von Wasserstoff durch Steam Reforming entsteht als Koppelprodukt Kohlenstoffmonoxid, das hoch giftig und nur sehr schwer aus Gasgemischen zu entfernen ist. Durch eine geschickte Überführung in das leicht abzutrennende Kohlenstoffdioxid in einer Wassergas-Shift-Reaktion kann sogar zusätzlicher Wasserstoff erzeugt werden:

CO + H₂O ↔ CO₂ + H₂

Die Reaktion ist stark exotherm, was den Nachteil hat, dass sich bei hohen Temperaturen das Gleichgewicht in Richtung der Edukte verschiebt und signifikante Mengen an Kohlenmonoxid im Produktgasgemisch verbleiben. Führt man die Wassergas-Shift-Reaktion hingegen bei tieferen Temperaturen durch, liegt das Reaktionsgleichgewicht zwar stärker auf der Seite der Reaktionsprodukte, allerdings verläuft die Reaktion sehr langsam.

In der Technik wird die Reaktion je nach Einsatzprofil in drei verschiedenen Temperaturbereichen durchgeführt, als Hoch-, Mittel- und Tieftemperatur-Shift. Diese unterscheiden sich in ihren Eintrittstemperaturen, wobei bei höheren Temperaturen typischerweise höhere Eintrittskonzentrationen an Kohlenstoffmonoxid verarbeitet werden können, bei niedrigeren Temperaturen aber geringere Austrittskonzentrationen an Kohlenstoffmonoxid erreicht werden. Für jede Temperaturstufe existieren spezialisierte Katalysatoren, die sich in ihrer Zusammensetzung und ihrem Betriebsbereich deutlich unterscheiden können.

Durch die Verschiebung der Gleichgewichtslage zu den Edukten infolge der Temperaturerhöhung während der Reaktion muss sie typischerweise mehrstufig durchgeführt werden mit Zwischenkühlung. Es ist üblich, das Prozessgas soweit herunter zu kühlen, dass folgende Reaktoren eine niedrigere Temperaturstufe einnehmen, meist eine Hochtemperatur- und eine Niedertemperatur-Shift. Diese Anordnung ermöglicht die Erzielung möglichst niedriger Konzentrationen an verbleibendem Kohlenstoffmonoxid bei gleichzeitiger Minimierung der Menge an eingesetztem Katalysator.

Die Mitteltemperatur-Shift wird hauptsächlich als Einzelbett betrieben ohne zweite Stufe, vor allem in Prozessen, in denen der Wasseranteil des Gasstromes kleiner ist als typisch für Ammoniak-Anlagen. Da der Katalysator bei höheren Temperaturen stabil ist als bei der Niedertemperatur-Shift (LTS), kann die Mitteltemperatur-Shift (MTS) eine höhere Eintrittskonzentration an Kohlenstoffmonoxid verarbeiten.

Eine niedrige Austrittskonzentration an Kohlenstoffmonoxid ist wünschenswert, da es den Katalysator für die Synthese von Ammoniak vergiften würde. Es wird daher in einem weiteren Reaktionsschritt in Methan umgewandelt, wozu jedoch drei Äquivalente Wasserstoff aufgewendet werden müssen:

CO + 3 H₂ ↔ CH₄ + H₂O

Ein verringerter Restgehalt an CO führt also zu einer höheren Zufuhr an Wasserstoff in den Syntheseloop und damit einer höheren Produktion von Ammoniak bei konstantem Verbrauch von Erdgas.

In der US 2014/0264178 A1 wird eine Kombination von mehreren seriellen CO-Shifts beschrieben, wobei insgesamt vier Wassergas-Shift Reaktoren vorgesehen sind, die von dem Synthesegas durchströmt werden. Zwischen den Reaktoren wird das Synthesegas jeweils in Wärmetauschern gekühlt, so dass die nachgeschalteten CO-Shifts bei niedrigeren Temperaturen erfolgen als die erste CO-Shift. In dieser Schrift wird an einer Stelle die Möglichkeit einer parallelen Anordnung mehrerer CO-Shift-Reaktoren erwähnt, jedoch gibt es in den Beispielen dazu keine konkrete Offenbarung.

In der US-Schrift 2012/0291481 A1 ist in einem Ausführungsbeispiel nur ein CO-Shift Reaktor eingezeichnet, im Text wird jedoch erwähnt, dass die Wassergas-Shift-Reaktion mehrere Stufen haben kann. Dies können beispielsweise drei CO-Shift-Stufen sein, eine Hochtemperatur-Shift, eine Mitteltemperatur-Shift und ein Niedrigtemperatur-Shift. Diese CO-Shift-Stufen sind jedoch in Serie angeordnet. Optional kann noch ein weiterer Niedrigtemperatur-Shift-Reaktor vorgesehen sein, der stromabwärts zu dem oder den übrigen CO-Shift-Reaktoren und in Reihe zu diesen geschaltet ist. Zu einer Parallelschaltung wird in diesem Dokument nichts ausgesagt.

In der US-Schrift 2015/0044120 A1 wird erwähnt, dass ein erster CO-Shift-Konverter zwei oder mehrere Reaktoren in Serie oder parallel angeordnet umfassen kann. Dabei können auch mehrere Mitteltemperatur- oder mehrere Niedertemperatur-Konverter verwendet werden. Im Ausführungsbeispiel werden allerdings konkret nur eine HT-Shift und eine LT-Shift in Serie dargestellt-eine herkömmliche Konstellation. Die Erwähnung "oder parallel angeordnet" bezieht sich nur auf den im Beispiel dargestellten Shift-Konverter insgesamt, welcher HT-Shift und LT-Shift umfasst, so dass diese Druckschrift konkret nicht eine Ausführungsform mit zwei parallel geschalteten LT-Shifts offenbart.

### Offenbarung der Erfindung

Der vorliegenden Erfindung liegt daher die Aufgabe zugrunde, aus dem Steam Reforming-Verfahren entstammendes Synthesegas nahezu oder gar vollständig von Kohlenstoffmonoxid zu befreien. Insbesondere liegt der Erfindung die Aufgabe zugrunde, die Wasserstoffausbeute ausgehend von dem Steam Reforming-Verfahren zu erhöhen. Schließlich liegt der Erfindung die Aufgabe zugrunde, mit aus dem Steam Reforming-Verfahren entstammenden Wasserstoff zu möglichst hohen Ausbeuten und einer effizienten Prozessführung bei der Ammoniak-Synthese zu gelangen.

Die Lösung der vorgenannten Aufgabe liefert ein Verfahren zur Durchführung der Wassergas-Shift-Reaktion mit Einheiten zur Hochtemperatur- und Niedertemperatur-CO-Konvertierung mit den Merkmalen des Anspruchs 1.

Erfindungsgemäß ist vorgesehen, dass der Synthesegasstrom nach dem Durchströmen der mindestens einen Einheit zur Hochtemperatur-CO-Konvertierung in mindestens zwei Teilströme aufgeteilt wird, wobei der erste Teilstrom durch eine erste Einheit zur Niedertemperatur-CO-Konvertierung geleitet wird und der zweite Teilstrom durch eine zweite Einheit zur Niedertemperatur-CO-Konvertierung geleitet wird, wobei beide Einheiten zur Niedertemperatur-CO-Konvertierung zueinander parallel angeordnet sind.

Erfindungsgemäß wird somit das bei der Synthesegas-Herstellung, beispielsweise mittels des Steam Reforming-Verfahrens erhaltene Syntheserohgas zunächst einer Wassergas-Shift-Reaktion unter Hochtemperatur-CO-Konvertierungsbedingungen unterworfen sowie anschließend gegebenenfalls gekühlt und sodann in mindestens zwei Teilströme aufgeteilt, welche separat, das heißt parallel in jeweils mindestens einer Wassergas-Shift-Reaktion unter Niedertemperatur-CO-Konvertierungsbedingungen noch weitergehend umgesetzt werden.

Hierbei ist es in einer alternativen Ausgestaltung auch möglich, das der Hochtemperatur-CO-Konvertierung entstammende Produktgasgemisch zunächst aufzusplitten und dann die Teilströme einzeln zu kühlen, bevor diese in separaten Einheiten jeweils einer Tieftemperatur-CO-Konvertierung unterworfen werden.

Gemäß einer ersten bevorzugten Ausführungsvariante des erfindungsgemäßen Verfahrens wird der Synthesegasstrom nach dem Durchströmen der mindestens einen Einheit zur Hochtemperatur-CO-Konvertierung in zwei Teilströme aufgeteilt, welche jeweils einen Anteil von 40 Volumen-% bis 60 Volumen-% des gesamten Synthesegasstroms nach der Hochtemperatur-CO-Konvertierung umfassen, vorzugsweise in zwei etwa gleich große Teilströme, welche jeweils etwa 50 Volumen-% des gesamten Synthesegasstroms nach der Hochtemperatur-CO-Konvertierung umfassen.

Alternativ dazu kann aber der Synthesegasstrom nach dem Durchströmen der mindestens einen Einheit zur Hochtemperatur-CO-Konvertierung auch in zwei unterschiedlich große Teilströme aufgeteilt werden, wobei ein erster Teilstrom einen Anteil von 95 Volumen-% bis 65 Volumen-%, vorzugsweise einen Anteil von beispielsweise 85 Volumen-% bis 65 Volumen-% des gesamten Synthesegasstroms nach der Hochtemperatur-CO-Konvertierung umfasst und ein zweiter Teilstrom einen Anteil von 5 Volumen-% bis 35 Volumen-%, vorzugsweise einen Anteil von 15 Volumen-% bis 35 Volumen-% des gesamten Synthesegasstroms nach der Hochtemperatur-CO-Konvertierung umfasst.

Vorzugsweise liegt bei dem erfindungsgemäßen Verfahren die Eintrittstemperatur des Syntheserohgases in die Hochtemperatur-CO-Konvertierung im Bereich von 350 - 400 °C.

Vorzugsweise liegt weiterhin bei dem erfindungsgemäßen Verfahren die maximale Austrittstemperatur des Synthesegasstroms aus der Hochtemperatur-CO-Konvertierung im Bereich von 430 - 450 °C.

Vorzugsweise wird gemäß einer Weiterbildung des Verfahren der Synthesegasstrom nach dem Austritt aus der Hochtemperatur-CO-Konvertierung und vor Eintritt in die beiden Einheiten zur Niedertemperatur-CO-Konvertierung mittels einer Kühleinheit, bevorzugt mittels eines Wärmetauschers abgekühlt, so dass die Eintrittstemperatur bei Eintritt in die beiden Einheiten zur Niedertemperatur-CO-Konvertierung im Bereich von 180 °C bis 220 °C liegt.

Vorzugsweise liegt weiterhin bei dem erfindungsgemäßen Verfahren die maximale Austrittstemperatur des Synthesegasstroms aus den beiden Einheiten zur Niedertemperatur-CO-Konvertierung im Bereich von 220 bis 240 °C.

Aus den oben angegebenen Eintritts- und Austrittstemperaturen ergibt sich, was definitionsgemäß im Rahmen der vorliegenden Erfindung unter einer Hochtemperatur-CO-Konvertierung bzw. einer Niedertemperatur-CO-Konvertierung verstanden wird.

Gemäß einer Weiterbildung des erfindungsgemäßen Verfahrens liegt die bevorzugte Eintrittskonzentration des Syntheserohgases an Kohlenstoffmonoxid bei Eintritt in die Hochtemperatur-CO-Konvertierung im Bereich von etwa 10 mol-% bis 16 mol-% und die Austrittskonzentration des Synthesegasstroms an Kohlenstoffmonoxid bei Austritt aus der Hochtemperatur-CO-Konvertierung und bei Eintritt in die Niedertemperatur-CO-Konvertierung liegt jeweils im Bereich von etwa 3 mol-% bis 5 mol-%.

Hingegen liegt vorzugsweise die Austrittskonzentration des Synthesegasstroms an Kohlenstoffmonoxid bei Austritt aus der Niedertemperatur-CO-Konvertierung bei weniger als 0,8 mol-%, vorzugsweise bei weniger als 0,6 mol-%, besonders bevorzugt bei weniger als 0,4 mol-%. Diese Angaben verdeutlichen, dass in der Niedertemperatur-CO-Konvertierung die Konzentration an Kohlenstoffmonoxid im Synthesegasstrom weiter erheblich gesenkt wird, beispielsweise auf ein Achtel bis ein Dreizehntel der Kohlenstoffmonoxid-Konzentration bei Austritt aus der Hochtemperatur-CO-Konvertierung.

Geeignete Wassergas-Shift-Katalysatoren können zum Beispiel ausgewählt werden aus der Gruppe bestehend aus Eisenoxid, Nickeloxid, Kobaltoxid, Wolframoxid, Chromoxid, Molybdänoxid oder beliebigen Mischungen hiervon. Die vorangehend genannten Katalysatoren werden bevorzugt für die Hochtemperatur-CO-Konvertierung eingesetzt. Für die Niedertemperatur-CO-Konvertierung kommen häufig als Katalysatoren Kupfer, Zink, Chrom, Wolfram, Silizium, Palladium und Molybdän in Frage, und zwar entweder in elementarer Form oder in Form von Verbindungen dieser Metalle. Wassergas-Shift-Katalysatoren für die Hochtemperatur- bzw. Tieftemperatur-CO-Konvertierung sind dem Fachmann bekannt und zudem im Handel erhältlich. Auch die bei diesen Umwandlungsreaktionen eingesetzten Drücke sind dem Fachmann geläufig.

Beispielsweise erfolgt bei dem erfindungsgemäßen Verfahren die Wassergas-Shift-Reaktion in der Hochtemperatur-CO-Konvertierung in Gegenwart eines eisenhaltigen Katalysators, welcher vorzugsweise neben Eisen Chrom und Kupfer enthält, welche in geringerer Menge im Katalysator enthalten sind als Eisen.

Der Katalysator für die Niedertemperatur-CO-Konvertierung kann sich von dem vorgenannten Katalysator unterscheiden. So kann beispielsweise die Wassergas-Shift-Reaktion in der Niedertemperatur-CO-Konvertierung in Gegenwart eines kupferhaltigen Katalysators erfolgen, welcher vorzugsweise neben Kupfer Zink und Aluminium enthält, welche bevorzugt in geringerer Menge im Katalysator enthalten sind als Kupfer.

Gegenstand der vorliegenden Erfindung ist weiterhin eine Vorrichtung zur Durchführung der Wassergas-Shift-Reaktion, insbesondere gemäß einem Verfahren nach einem der vorhergehenden Ansprüche, umfassend mindestens eine Einheit zur Hochtemperatur-CO-Konvertierung,
mindestens eine erste und eine zweite Einheit zur Niedertemperatur-CO-Konvertierung, welche der Einheit zur Hochtemperatur-CO-Konvertierung im Strömungsweg nachgeschaltet sind,
mindestens eine Einheit zum Kühlen des der Einheit zur Hochtemperatur CO-Konvertierung entnommenen Produktgasgemisches, wobei erfindungsgemäß stromabwärts der Einheit zum Kühlen im Leitungssystem eine Einrichtung zum Aufteilen des Produktgasgemisches in zwei Teilströme vorgesehen ist und wobei eine erste Einheit zur Niedertemperatur-CO-Konvertierung und eine zweite Einheit zur Niedertemperatur-CO-Konvertierung parallel zueinander und stromabwärts der Einrichtung zum Aufteilen angeordnet sind, derart, dass sie nur von jeweils einem der beiden Teilströme durchströmbar sind.

Vorzugsweise umfasst diese Vorrichtung gemäß einer vorteilhaften Weiterbildung der Erfindung eine Austrittsleitung aus der Einheit zur Hochtemperatur-CO-Konvertierung, welche sich aufteilt in mindestens zwei Leitungen, nämlich eine Leitung für den ersten Teilstrom, welche zu der ersten Einheit zur Niedertemperatur-CO-Konvertierung führt und eine Leitung für den zweiten Teilstrom, welche zu der zweiten Einheit zur Niedertemperatur-CO-Konvertierung führt.

Vorzugsweise weist gemäß einer vorteilhaften Weiterbildung der Erfindung die zweite Einheit zur Niedertemperatur-CO-Konvertierung nur einen Bruchteil der Größe und/oder der Anlagenkapazität der ersten Einheit zur Niedertemperatur-CO-Konvertierung auf und/oder die zweite Einheit zur Niedertemperatur-CO-Konvertierung enthält nur einen Bruchteil der Katalysatormenge, die die erste Einheit zur Niedertemperatur-CO-Konvertierung enthält.

Vorzugsweise liegt gemäß einer bevorzugten Weiterbildung der Erfindung der Bruchteil der Größe und/oder der Anlagenkapazität und/oder der Katalysatormenge der zweiten Einheit zur Niedertemperatur-CO-Konvertierung bezogen auf die erste Einheit zur Niedertemperatur-CO-Konvertierung im Bereich des 0,15-fachen bis 0,40-fachen.

Vorzugsweise weist die Vorrichtung gemäß einer vorteilhaften Weiterbildung der Erfindung mindestens eine zweite Einheit zum Kühlen des Produktgasgemisches auf, welche im Leitungsweg stromabwärts der ersten Einheit zur Niedertemperatur-CO-Konvertierung angeordnet ist und nicht von dem aus der zweiten Einheit zur Niedertemperatur-CO-Konvertierung austretenden Produktgasgemisch durchströmt wird und/oder die Vorrichtung weist mindestens eine dritte Einheit zum Kühlen des Produktgasgemisches auf, welche im Leitungsweg stromabwärts der zweiten Einheit zur Niedertemperatur-CO-Konvertierung angeordnet ist und nicht von dem aus der ersten Einheit zur Niedertemperatur-CO-Konvertierung austretenden Produktgasgemisch durchströmt wird.

Auf die Kühlung im Anschluss an eine Niedertemperatur-CO-Konvertierung kann regelmäßig nicht verzichtet werden. Denn wird ein Produktgasgemisch beispielsweise mit einer Einlasstemperatur im Bereich von 180 bis 220 °C in die Einheit zur Tieftemperatur-CO-Konvertierung eingeführt, verlässt es diese Einheit aufgrund des exothermen Charakters der Umwandlungsreaktion häufig mit einer Temperatur im Bereich von beispielsweise 210 bis 240 °C.

Die Menge an Wassergas-Shift-Katalysator wird in dem erfindungsgemäßen Verfahren zweckmäßigerweise derart hoch eingestellt, dass eine signifikante Annäherung an die Gleichgewichtslage der Wassergas-Shift-Reaktion unter verstärkter Bildung von Kohlendioxid gelingt. Ohne an eine Theorie gebunden zu sein, wird gegenwärtig angenommen, dass die stärkere Annäherung an die Gleichgewichtslage auf die erfindungsgemäße parallele Verschaltung bzw. auf die erfolgte Zwischenkühlung zurückgeführt werden kann.

Das erfindungsgemäße Verfahren umfasst ferner in vorteilhafter Weise, insbesondere wenn Bestandteil eines Verfahrens zur Herstellung von Ammoniak aus Synthesegas, die Abtrennung von Kohlendioxid aus dem Produktgasgemisch nach der Niedertemperatur-CO-Shift-Reaktion. Geeignete Abtrennvorrichtungen, mit denen beispielsweise eine sogenannte CO₂-Wäsche vorgenommen werden kann, sind dem Fachmann bekannt. Beispielsweise können für die Entfernung von Kohlendioxid selektive chemische und/oder physikalische Adsorbentien eingesetzt werden. Hierfür kann unter anderem auf dem Fachmann bekannte Gegenstromverfahren zurückgegriffen werden, bei denen das Produktgasgemisch der Kohlenstoffmonoxidkonvertierung mit einem Adsorptionsmittel in Kontakt gebracht wird.

Wird Synthesegas beispielsweise mit dem Steam Reformer-Verfahren gewonnen, um anschließend für die Herstellung von Ammoniak verwendet zu werden, können die erfindungsgemäßen Verfahren ohne weiteres in die hierfür erforderliche Prozessführung integriert werden. Üblicherweise wird bei dem Steam Reformer-Verfahren auf einen Primäreformer und einen Sekundärreformer zurückgegriffen. Alternativ kann bei dem Steam Reformer-Verfahren anstatt eines Primärreformers auch eine alternative Vorrichtung zur Erzeugung von Synthesegas bzw. eine alternative Quelle für Synthesegas eingesetzt werden, beispielsweise der Haldor-Topsoe-Exchange-Reformer. Bei der Primärreformierung werden in der Regel gasförmige Kohlenwasserstoffe durch Rohrsysteme geleitet, die den Reformierungskatalysator enthalten. Bei der Primärreformierung werden die gasförmigen Kohlenwasserstoffe, zumeist Methan, in Gegenwart von Wasserdampf in Wasserstoff und Kohlenmonoxid umgewandelt. Bei der sich hieran anschließenden Sekundärreformierung werden im Allgemeinen im Produktgasgemisch verbliebene Kohlenwasserstoffe in Gegenwart von Sauerstoff und eines Reformierungskatalysators in Kohlendioxid und Wasserstoff umgewandelt. Das hierbei erhaltene Syntheserohgas enthält neben Wasserstoff signifikante Mengen an Kohlenmonoxid.

Demgemäß schließt sich in einer bevorzugten Ausgestaltung an die Sekundärreformierung das erfindungsgemäße Verfahren der Kohlenstoffmonoxidkonvertierung an. Auf diese Weise kann der Kohlenstoffmonoxidgehalt noch einmal signifikant reduziert werden. Alternativ oder zusätzlich ist es auch möglich, die erfindungsgemäßen Verfahren zwischen Primär- und Sekundärreformierung einzubauen.

Mit der Verringerung des Restgehalts an Kohlenstoffmonoxid im Synthesegas kann auch der letztendliche Anteil an Methan in dem Produktgasgemisch, das für die Ammoniak-Herstellung eingesetzt wird, gering gehalten werden. Denn zur Abtrennung nach der Kohlenstoffmonoxidkonvertierung noch verbleibender Gehalte an Kohlenstoffmonoxid wird häufig auf eine sogenannte Methanisierung zurückgegriffen, bei der Kohlenstoffmonoxid mit Wasserstoff zu Methan und Wasser umgesetzt wird. Durch die Reduzierung oder vollständige Eliminierung der Methanisierung kann eine Verdünnung des Synthesegases durch inerte Gase verhindert werden. Auch steht effektiv mehr Wasserstoff für die Ammoniakherstellung zur Verfügung, so dass der Gesamtverbrauch an Wasserstoff verringert werden kann.

Mit dem erfindungsgemäßen Verfahren gelingt es, dass das entnommene Produktgasgemisch eine Kohlenstoffmonoxidkonzentration kleiner oder gleich 0,30 mol-%, bevorzugt kleiner oder gleich 0,28 mol-% und besonders bevorzugt kleiner oder gleich 0,26 mol-%, aufweist.

Darüber hinaus kann in einer Weiterentwicklung des erfindungsgemäßen Verfahrens der Einheit zur Niedertemperatur-CO-Konvertierung beispielsweise ein Gesamtstrom an Produktgasgemisch im Bereich von 15.000 bis 25.000 kmol/h, vorzugsweise im Bereich von 18.000 bis 23.000 kmol/h, entnommen werden. Die genannten Werte für den Gesamtstrom sind nur beispielhaft zu verstehen und gelten für große Anlagen mit beispielsweise einer Produktion von 3300 t/d (Tagestonnen). Bei kleineren Anlagen mit beispielsweise 1100 t/d gelten entsprechend geringere Mengen an Produktgasgemisch, die entnommen werden können.

Die erfindungsgemäße Vorrichtung umfasst:
mindestens eine Einheit zur Hochtemperatur-CO-Konvertierung,
mindestens eine erste und eine zweite Einheit zur Niedertemperatur-CO-Konvertierung, mindestens eine Einheit zum Kühlen des der Einheit zur Hochtemperatur-CO-Konvertierung entnommenen oder entnehmbaren Produktgasgemisches,
wobei die Einheit zum Kühlen des der Einheit zur Hochtemperatur-CO-Konvertierung entnommenen oder entnehmbaren Produktgasgemisches oder eine gegebenenfalls nachgeschaltete Einheit eingerichtet und ausgelegt ist, das gekühlte Produktgasgemisch aufzuteilen und die Teilströme zu der ersten und zweiten Einheit zur Niedertemperatur-CO-Konvertierung zu leiten und
gegebenenfalls eine Einheit zum Kühlen des der ersten Einheit zur Niedertemperatur-CO-Konvertierung entnommenen oder entnehmbaren Produktgasgemisches und/oder eine Einheit zum Kühlen des der zweiten Einheit zur Niedertemperatur-CO-Konvertierung entnommenen oder entnehmbaren Produktgasgemisches.

Geeignete Einheiten zum Kühlen eines Produktgasgemisches sind dem Fachmann bekannt. Hierfür kommen häufig Wärmetauscher zum Einsatz.

Das erfindungsgemäße Verfahren sowie die erfindungsgemäße Vorrichtung eignen sich insbesondere für den Einsatz bei der Herstellung von Synthesegas und/oder bei der Herstellung von Ammoniak. Demgemäß wird im Rahmen der vorliegenden Erfindung ebenfalls die Verwendung von mindestens zwei Einheiten zur Niedertemperatur-CO-Konvertierung neben mindestens einer Einheit zur Hochtemperatur-CO-Konvertierung für die Durchführung der Wassergas-Shift-Reaktion beansprucht, wobei die mindestens zwei Einheiten zur Niedertemperatur-CO-Konvertierung parallel geschaltet sind.

Gegenstand der vorliegenden Erfindung ist somit weiterhin die Verwendung der zuvor beschriebenen Vorrichtung zur Durchführung der Wassergas-Shift-Reaktion in einem Verfahren zur Herstellung von Ammoniak.

Weitere Merkmale und Vorteile der Erfindung ergeben sich aus der nachgehenden Beschreibung, in der eine bevorzugte Ausführungsform der Erfindung beispielhaft anhand einer schematischen Zeichnung erläutert wird.

### Kurze Beschreibung der Figuren

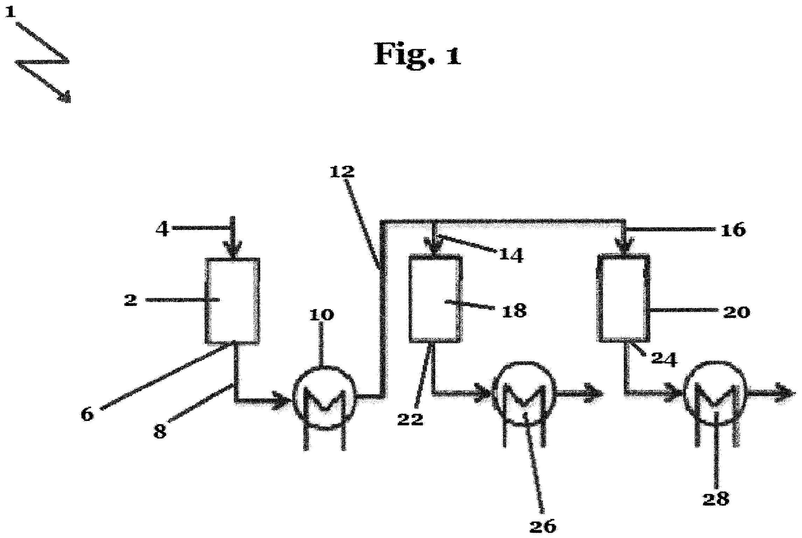

- Figur 1: zeigt eine schematische Darstellung einer beispielhaften Ausführungsvariante der erfindungsgemäßen Vorrichtung.

### Ausführungsformen der Erfindung

Die in Figur 1 dargestellte Ausführungsvariante einer erfindungsgemäßen Vorrichtung 1 umfasst, wie in Figur 1 gezeigt, eine Einheit 2 zur Hochtemperatur-CO-Konvertierung mit einer Zuleitung 4 für z.B. Syntheserohgas und einem Auslass 6 für das Produktgasgemisch. Die Hochtemperatur-CO-Konvertierung des Kohlenmonoxids aus dem Syntheserohgas kann z.B. bei Temperaturen im Bereich von etwa 370 °C durchgeführt werden. Das der Einheit 2 entnommene Produktgasgemisch wird über eine Leitung 8 einer Kühleinheit 10, beispielsweise einem Wärmetauscher, zugeführt und in einer Ausführungsform auf Temperaturen im Bereich von 200 ° C heruntergekühlt. Nach Verlassen der Kühleinheit 10 wird das gekühlte Produktgasgemisch aufgesplittet. Das kann beispielsweise dadurch geschehen, dass die Austrittsleitung 12 sich aufteilt in eine Leitung 14 für den ersten Teilstrom und eine Leitung 16 für den zweiten Teilstrom. Auf diese Weise werden die Teilströme separaten ersten und zweiten Niedertemperatur-CO-Konvertierungseinheiten 18 und 20 zugeführt. In diesen findet die Kohlenstoffmonoxidkonvertierung in Gegenwart eines Katalysators bei Temperaturen im Bereich von z.B. 200 °C statt. Da die Umwandlung von Kohlenstoffmonoxid in Kohlenstoffdioxid stark exotherm ist, kommt es während des Aufenthalts in der ersten bzw. in der zweiten Tieftemperatur-CO-Konvertierungseinheit 18, 20 zu einer Erwärmung des Produktgasgemisches. Nach Verlassen dieser Einheit über die Auslässe 22 und 24 werden die Produktgasteilströme über Kühleinheiten 26 und 28 erneut heruntergekühlt.

Nachfolgend wird die vorliegende Erfindung anhand von konkreten Beispielen näher erläutert.

Man unterscheidet bei der Wassergas-Shift-Reaktion zwischen drei Typen, deren Einteilung und Bezeichnung entsprechend der jeweils herrschenden Reaktionstemperaturen erfolgt, nämlich die Hochtemperatur-Shift (abgekürzt HT-Shift oder HTS),
die Mitteltemperatur-Shift (abgekürzt MT-Shift) und
die Tieftemperatur-Shift oder Niedertemperatur-Shift (abgekürzt LT-Shift oder LTS), wobei für das Verfahren gemäß der vorliegenden Erfindung die Mitteltemperatur-Shift keine besondere Bedeutung hat.

Folgende Betriebsbedingungen kommen beispielsweise für die beiden hier relevanten Typen der Shift-Reaktion in Betracht:
- Hochtemperatur-Shift
   o Eintrittstemperatur 350-400°C (370°C im typischen Design)
   o Austrittstemperatur 400-440°C (begrenzt, um Sintern des Katalysators zu verhindern)
   o Eintrittskonzentration CO 13 mol-% (exklusive Wasser)
   o Austrittskonzentration CO 4 mol-%
   o Katalysator: KATALCO 71-5 von Johnson Matthey Catalyst
   o Zusammensetzung: Fe (88%), Cr (9%), Cu(3%)
- Niedertemperatur-Shift (entspricht dem auch verwendeten Begriff der Tieftemperatur-Shift).
   ∘ Eintrittstemperatur 180-220°C (200°C im typischen Design)
   o Austrittstemperatur 200-230°C (begrenzt, um Sintern des Katalysators zu verhindern)
   o Eintrittskonzentration CO 3-5 mol-% (excl. Wasser)
   o Austrittskonzentration CO 0.2-0,5 mol-%
   o Katalysator: KATALCO 83-3 von Johnson Matthey
   o Zusammensetzung: Cu (51%), Zn (31%), Al (18%)
- Bei der im Stand der Technik auch verwendeten Mitteltemperatur-Shift liegen üblicherweise nachfolgend genannte Bedingungen vor:
   o Eintrittstemperatur 200-230°C
   o Austrittstemperatur 300-350°C (begrenzt, um Sintern des Katalysators zu verhindern)
   o Eintrittskonzentration beispielsweise CO 9 mol-% (excl. Wasser)
   o Austrittskonzentration beispielsweise CO 0.5 mol-%.

### Vergleichsbeispiel:

In diesem ersten Beispiel soll die Kapazität einer bestehenden Anlage zur Durchführung der Wassergas-Shift-Reaktion erweitert werden. Diese beispielhafte Ausführungsvariante der Erfindung wird im Weiteren als Fall 0 bezeichnet werden. Die Kapazitätserweiterung soll nach Maßgabe der nachfolgenden Parameter erfolgen.
- Ursprüngliche Kapazität: 3300 t/d Ammoniak
- Kapazitätserweiterung: 20 % -> 3960 t/d (Tagestonnen) Ammoniak
- HT-Shift: 82,6 m³ Katalysator vom Typ KATALCO 71-5 (siehe oben)
- LT-Shift: 139 m³ Katalysator vom Typ KATALCO 83-3 (siehe oben)
- Berechnete Lebensdauer 5 Jahre

| | CO₂ | CO | trockenes Gas | H₂O | Temperatur |
|---|---|---|---|---|---|
| | mol-% (dry) | | kmol/h | | °C |
| HTS Einlass | 6.96 | 13.4 | 18757 | 8894 | 370 |
| HTS Auslass | 15.18 | 3.38 | 20574 | 7077 | 442 |
| LTS Einlass | 15.18 | 3.38 | 20574 | 7077 | 200 |
| LTS Auslass | 17.69 | 0.33 | 21199 | 6451 | 226 |

### Kapazitätserweiterung

Grundsätzlich wäre es denkbar, in gewissem Rahmen die Kapazität der Anlage zu erhöhen ohne Änderung an den Reaktoren der CO-Shift durchzuführen. Die erhöhte Katalysatorbelastung, also die Menge Gas, die pro Stunde von einer Menge Katalysator verarbeitet wird, würde steigen, was die Kontaktzeit des Gases mit dem Katalysator verkürzt und durch höheren Abstand zum Gleichgewicht zu einer Erhöhung der Austrittskonzentration an Kohlenmonoxid führt. Dies ist mit frischem Katalysator keine besondere Einschränkung, reduziert jedoch deutlich die Lebensdauer des Katalysators.

Die Lebensdauer von Shift-Katalysatoren ist durch fortschreitende Vergiftung durch Chloride und andere Katalysatorgifte begrenzt. Die Menge an Katalysator wird daher so gewählt, dass nach der vorgegebenen Lebensdauer die gewünschte Austrittskonzentration immer noch erreicht werden kann, indem der dafür benötigen Katalysatormenge eine Menge hinzugefügt wird, die am Ende dieser Lebensdauer durch Vergiftung inaktiv ist. Über diese benötigte Menge hinaus eingesetzter Katalysator steht als Reserve zur Verfügung und erhöht die Lebensdauer des Bettes. Durch die Vergiftung ergibt sich dabei der Effekt, dass frischer Katalysator Austrittskonzentrationen deutlich unterhalb des Designwertes ermöglicht, da mehr als die benötigte Menge Katalysator zur Verfügung steht, und sich diese zum Ende der Lebensdauer dem Designwert exponentiell annähert. In der Praxis wird der Katalysator betrieben bis der mit der Vergiftung einhergehende Druckverlust den Betrieb unwirtschaftlich macht oder die erhöhte Austrittskonzentration an Kohlenmonoxid zu so hohen Verlusten an Wasserstoff führt, dass darüber die Wirtschaftlichkeit nicht mehr gegeben ist.

Für eine Kapazitätserweiterung um 20 % auf 3960 t/d, bei der die Lebensdauer des Katalysators erhalten bleiben soll, muss daher zusätzlicher Katalysator bereitgestellt werden. Da eine Erweiterung der Ammoniakproduktion weitgehend linear zu einer Erhöhung des Prozessgasstroms durch die CO-Shift führt, würde nach der Erweiterung der Strom am Eintritt der HTS bei etwa 526271 kg/h liegen. Der Aufbau eines parallel geschalteten LTS-Reaktors mit 34,8 m³ Katalysator führt nach einer Lebensdauer von 5 Jahren zu derselben Austrittskonzentration von 0.33 mol-% (trocken) an Kohlenmonoxid wie im Hauptstrang, wenn durch den parallelen Nebenstrang 20 % des gesamten Gasstroms geleitet werden. Der Druckverlust des parallelen Strangs ist von der Reaktorgeometrie abhängig, sollte in diesem Beispiel aber genau so groß sein wie der Hauptstrang. Dieser Fall wird im Weiteren als Fall 1 bezeichnet.

Insbesondere während eines Revamps, aber eventuell auch während der Neuplanung einer Anlage kann eine Abweichung von diesem Konzept vorteilhaft sein. Wird die Tieftemperatur-Shift-Reaktion in zwei parallel aufgestellten Reaktoren durchgeführt, kann dies positive Auswirkungen haben auf:
- Anlagenkapazität
- Austrittskonzentration
- Druckverlust
- Standzeit des Katalysators

Die Zielsetzung, welcher dieser Aspekte im vorliegenden Fall erwünscht ist, bestimmt die Größe des parallelen Reaktors und die Menge und Verteilung des Katalysators.

Um beim obigen Beispiel von 20 % Kapazitätssteigerung zu bleiben, können die folgenden drei Fälle unterschieden werden.

### Beispiel 1 (erfindungsgemäß):

Parallele Niedertemperatur-Shift mit 16.7 % des Gesamtstroms und der nach Auslegung benötigten Menge an Katalysator.

Die Anlagenkapazität ist erhöht durch die Verarbeitung des zusätzlichen Gases ausschließlich im parallelen Reaktor. Die benötigte Menge an Katalysator ist größer als 20 % des vorherigen Volumens, da bei gesteigerter Durchströmung die Austrittskonzentration der Hochtemperatur-Shift sinkt und zusätzlicher Katalysator benötigt wird, um dies zu kompensieren. Bezogen auf das obige Beispiel, in dem 34,8 m³ Katalysator erforderlich sind, um 20 % Produktionssteigerung zu erreichen, sind nur 139 m³*0.2 = 27,8 m³ für die Einstellung der Austrittskonzentration erforderlich, der Rest von 7 m³ wird für die Kompensation benötigt.

Die Austrittskonzentration wird in diesem Fall genauso hoch sein wie in der ursprünglichen Anlage, da die Menge des zusätzlichen Katalysators der zusätzlichen Menge Gas entspricht. C_{CO} = 0.33 mol-% (dry)

Der Druckverlust der parallelen Einheit ist von der Reaktorgeometrie, beziehungsweise von der Höhe des Katalysatorbettes abhängig. Da sich der Druckverlust des bestehenden Stranges nicht ändert, ist eine Optimierung des neuen Stranges unter diesen Wert unnötig, da beide Stränge denselben Druckverlust haben sollten, um die angestrebten Durchströmungsverhältnisse zu erreichen. Im vorliegenden Beispiel beträgt der Druckverlust Δp = 0,59 bar.

Die Standzeit des Katalysators wird nicht beeinflusst, da die Menge des eingesetzten Katalysators der Menge des zusätzlichen Gases entspricht. Die erwartete Lebensdauer verbleibt bei 5 Jahren.

### Beispiel 2 (erfindungsgemäß):

Parallele Niedertemperatur-Shift mit 35.2 % des Gesamtstroms und mehr als der nach Auslegung benötigten Menge an Katalysator.

Diese Variante beruht auf der Bereitstellung von mehr als der nach Auslegung streng notwendigen Menge an Katalysator, und einer teilweisen Verschiebung von Prozessgas in den parallelen Strang. Dies verringert die Katalysatorbelastung und durch die erhöhte Kontaktzeit des Gases mit dem Katalysator wird eine bessere Annäherung ans Gleichgewicht ermöglicht.

Da die Anlagenkapazität durch die Menge des durchströmenden Prozessgases bestimmt ist, hat diese Variante nur indirekt Vorteile gegenüber Beispiel 1.

Durch die erhöhte Menge an Katalysator kann eine geringere Austrittskonzentration erreicht werden, da die Reaktion näher an ihr Gleichgewicht geführt wird. Dies führt zu geringeren Verlusten an Wasserstoff zur Abreaktion des verbliebenen Kohlenmonoxids. Bei einer Erhöhung der Menge an Katalysator auf 75,6 m³ sinkt die Austrittskonzentration der Niedertemperatur-Shift auf 0,23 mol-%. Dies spart im vorliegenden Beispiel im weiteren Prozess 104 kmol/h Wasserstoff ein, die zur Abreaktion der Differenz an Kohlenmonoxid nötig gewesen wären. Aus dieser Menge Wasserstoff wiederum könnten 69 kmol/h an Ammoniak erzeugt werden, oder eine Menge von 28,3 t/d.

Durch die im Vergleich zu Beispiel 1 erhöhte Menge an Katalysator muss das Design des Reaktors geschickt gewählt werden, um den zusätzlichen Druckverlust zu vermeiden. Wenn dies konstruktiv nicht möglich ist, wird sich im parallelen Strang ein leicht höherer Druckverlust einstellen.

Durch die erhöhte Menge an Katalysator wird die Lebensdauer der beiden Betten auf 6,8 Jahre erhöht, bis die gewünschte Austrittskonzentration von 0.,3 mol-% (trocken) überschritten wird.

### Beispiel 3 (erfindungsgemäß):

Zwei parallele Niedertemperatur-Shift-Vorrichtungen mit Aufteilung des Synthesegasstroms im gleichen Verhältnis auf zwei Teilströme, Durchleitung von jeweils 50 % des Gesamtstroms durch jede der beiden parallel angeordneten Niedertemperatur-CO-Shift-Vorrichtungen und Verwendung der nach Auslegung benötigten Menge an Katalysator

Diese Variante beruht auf dem Gedanken, dass Prozessgas statt durch den vorhandenen Strang durch den parallelen Strang fließt. Der maximale Effekt stellt sich ein, wenn die Verteilung zwischen den Strömen genau 50:50 ist. Die Menge an Katalysator muss dabei mindestens so hoch sein, dass sie die Hälfte der Gesamtmenge an Prozessgas verarbeiten kann. Aus dem bestehenden Strang wird entsprechend Katalysator entnommen. Im vorliegenden Beispiel wären damit beide Reaktoren mit jeweils 86,9 m³ Katalysator gefüllt.

Auf die Anlagenkapazität hat diese Variante keine direkte Auswirkung, da nur eine räumliche Verlagerung der Reaktion stattfindet. Durch die Verringerung des Druckverlustes ist jedoch eine Steigerung der maximal möglichen Kapazität möglich.

Eine mögliche Reduzierung der Austrittskonzentration an Kohlenstoffmonoxid ist wie in den beiden vorigen Fällen an eine zusätzlich hinzu gefügte Menge an Katalysator gebunden. Dies ist möglich, würde jedoch dem grundsätzlichen Gedanken dieses Falles entgegenwirken.

Durch die Verringerung der Menge an Katalysator und die damit einhergehende Reduzierung der Betthöhe im vorhandenen Strang wird der Druckverlust der Niedertemperatur-Shift deutlich reduziert. In diesem Beispiel wird der Druckverlust über das Katalysatorbett von 0,59 bar bei 139 m³ auf 0,11 bar bei 86,9 m³ pro Bett verringert. Diese Reduzierung des Druckverlustes spart Energie beim Antrieb der vorgeschalteten Verdichter ein, was sich wiederum positiv auf die Wirtschaftlichkeit der Anlage auswirkt. Da bei Kapazitätssteigerungen der Gesamtdruckverlust über die Anlage sich der maximalen Druckerhöhung der vorangeschalteten Verdichter annähern kann und diese damit die maximale Kapazität der Anlage begrenzen, kann eine Aufstellung wie in diesem Fall die maximale Anlagenkapazität durch die Reduzierung des Druckverlustes erhöhen. In diesem Fall ist die maximale Kapazität bei 120,4 % der Nennkapazität erreicht, da das Druckprofil begrenzend wirkt. Mit der Verringerung des Druckverlustes durch die Aufstellung der Niedertemperatur-Shift wie in diesem Fall kann die maximale Kapazität der Anlage auf 122,4 % der Nennkapazität gesteigert werden, was einer Menge Ammoniak von 63,2 t/d entspricht. Ebenso wie die erreichbare Austrittskonzentration ist auch die Lebensdauer der Niedertemperatur-Shift von zusätzlichen Mengen an Katalysator abhängig. Dies ist möglich, würde aber der generellen Idee dieses Falles widersprechen.

Die nachfolgende Tabelle fasst die drei oben beschriebenen Beispiele und das Vergleichsbeispiel zusammen:

| | Strömungsverteilung [%] | | Katalysator [m3] | | C_{CO} [mol-% (trocken)] | | Druckverlust [bar] | | Lebensdauer [y] | |
|---|---|---|---|---|---|---|---|---|---|---|
| Variante | LTS 1 | LTS 2 | LTS 1 | LTS 2 | LTS 1 | LTS 2 | LTS 1 | LTS 2 | LTS 1 | LTS 2 |
| 0 | 83,3 | 0 | 139 | | 0,33 | | 0,59 | | 5 | |
| 1 | 83,3 | 16,7 | 139 | 34,8 | 0,33 | 0,33 | 0,59 | 0,59 | 5 | 5 |
| 2 | 64,8 | 35,2 | 139 | 75,6 | 0,23 | 0,23 | 0,4 | 0,4 | 6,8 | 6,8 |
| 3 | 50 | 50 | 86.9 | 86.9 | 0.33 | 0.33 | 0.11 | 0.11 | 5 | 5 |

Die Ergebnisse der oben wiedergegebenen Beispiele zeigen, dass es im Rahmen der vorliegenden Erfindung beispielsweise vorteilhaft ist, bei Bau von Neuanlagen oder bei Revamps bestehender Anlagen eine zusätzliche parallel geschaltete Niedertemperatur-Shift-Vorrichtung vorzusehen, in der 0-50 % der gesamten Katalysatormenge eingesetzt und in der 0-50 % des gesamten Synthesegasstromes verarbeitet werden.

Angestrebt werden im Rahmen der Erfindung Kapazitätserhöhungen von bis zu 100 % der vorherigen Kapazität, bevorzugt von wenigstens etwa 10 %, beispielsweise 10 % bis 13 %, um so zu einer Steigerung der Ammoniakproduktion zu kommen. In günstigen Fällen sind jedoch auch Kapazitätssteigerungen von beispielsweise bis zu 20 % durchaus realistisch.

Ein weiteres Ziel der Erfindung ist die Reduzierung des Druckverlustes durch Verlagerung von Prozessgas aus dem Primärstrang, eventuell sogar mit Verringerung der Katalysatormenge im Primärreaktor, auf 0,1 bis 0,5 bar, vorzugsweise auf 0,1 bis 0,4 bar je nach Ausführung, um so die Energieeffizienz des Prozesses zu verbessern.

Ein weiteres Ziel der Erfindung ist die Verringerung der Austrittskonzentration des Kohlenstoffmonoxids auf 0,05 bis 0,5 mol-% (trocken), bevorzugt auf etwa 0,2 mol-% (trocken), was zu einer Erhöhung der Ammoniak-Ausbeute führt.

Ein weiteres Ziel der Erfindung ist die Verlängerung der Lebensdauer der Anlage, bis die maximal erlaubte Austrittskonzentration erreicht ist, um bis zu 5 Jahre, vorzugsweise um mindestens etwa 2 Jahre, um so die Katalysatorkosten zu verringern.

Durch entsprechende Bereitstellung von Katalysator und Verteilung des Gasstromes können im Rahmen der vorliegenden Erfindung die wichtigen Betriebsparameter Anlagenkapazität, Druckverlust und Lebensdauer für den individuellen Anwendungsfall optimiert werden, mit positiven Nebeneffekten für die Ammoniakproduktion und den Energiehaushalt des Prozesses.

## Patentansprüche

1. Verfahren zur Durchführung der Wassergas-Shift-Reaktion bei dem Syntheserohgas in Gegenwart von Wasserdampf und mindestens einem Wassergas-Shift-Katalysator unter Umwandlung von Kohlenmonoxid in Kohlendioxid und unter Bildung von Wasserstoff umgesetzt wird, wobei das Syntheserohgas zunächst durch mindestens eine Einheit zur Hochtemperatur-CO-Konvertierung und anschließend stromabwärts von dieser durch mindestens zwei Einheiten zur Niedertemperatur-CO-Konvertierung geleitet wird, **dadurch gekennzeichnet, dass** der Synthesegasstrom nach dem Durchströmen der mindestens einen Einheit zur Hochtemperatur-CO-Konvertierung in mindestens zwei Teilströme aufgeteilt wird, wobei der erste Teilstrom durch eine erste Einheit (18) zur Niedertemperatur-CO-Konvertierung geleitet wird und der zweite Teilstrom durch eine zweite Einheit (20) zur Niedertemperatur-CO-Konvertierung geleitet wird, wobei beide Einheiten (18, 20) zur Niedertemperatur-CO-Konvertierung zueinander parallel angeordnet sind.

2. Verfahren nach Anspruch 1, **dadurch gekennzeichnet, dass** der Synthesegasstrom nach dem Durchströmen der mindestens einen Einheit zur Hochtemperatur-CO-Konvertierung (2) in zwei Teilströme aufgeteilt wird, welche jeweils einen Anteil von 40 Volumen-% bis 60 Volumen-% des gesamten Synthesegasstroms nach der Hochtemperatur-CO-Konvertierung umfassen, vorzugsweise in zwei etwa gleich große Teilströme, welche jeweils etwa 50 Volumen-% des gesamten Synthesegasstroms nach der Hochtemperatur-CO-Konvertierung umfassen.

3. Verfahren nach Anspruch 1, **dadurch gekennzeichnet, dass** der Synthesegasstrom nach dem Durchströmen der mindestens einen Einheit zur Hochtemperatur-CO-Konvertierung (2) in zwei unterschiedlich große Teilströme aufgeteilt wird, wobei ein erster Teilstrom einen Anteil von 95 Volumen-% bis 65 Volumen-%, vorzugsweise 85 Volumen-% bis 65 Volumen-% des gesamten Synthesegasstroms nach der Hochtemperatur-CO-Konvertierung umfasst und ein zweiter Teilstrom einen Anteil von 5 Volumen-% bis 35 Volumen-%. vorzugsweise von 15 Volumen-% bis 35 Volumen-% des gesamten Synthesegasstroms nach der Hochtemperatur-CO-Konvertierung umfasst,

4. Verfahren nach einem der Ansprüche 1 bis 3, **dadurch gekennzeichnet, dass** die Eintrittstemperatur des Syntheserohgases in die Hochtemperatur-CO-Konvertierung (2) im Bereich von 350 - 400 °C liegt.

5. Verfahren nach einem der Ansprüche 1 bis 4, **dadurch gekennzeichnet, dass** die maximale Austrittstemperatur des Synthesegasstroms aus der Hochtemperatur-CO-Konvertierung (2) Im Bereich von 430 - 450 °C liegt.

6. Verfahren nach einem der Ansprüche 1 bis 5, **dadurch gekennzeichnet, dass** der Synthesegasstrom nach dem Austritt aus der Hochtemperatur-CO-Konvertierung (2) und vor Eintritt in die beiden Einheiten (18, 20) zur Niedertemperatur-CO-Konvertierung mittels einer Kühleinheit (10), bevorzugt mittels eines Wärmetauschers abgekühlt wird, so dass die Eintrittstemperatur bei Eintritt in die beiden Einheiten (18, 20) zur Niedertemperatur-CO-Konvertierung im Bereich von 180 °C bis 220 °C liegt.

7. Verfahren nach einem der Ansprüche 1 bis 6, **dadurch gekennzeichnet, dass** die maximale Austrittstemperatur des Synthesegasstroms aus den beiden Einheiten (18, 20) zur Niedertemperatur-CO-Konvertierung im Bereich von 220 bis 240 °C liegt.

8. Verfahren nach einem der Ansprüche 1 bis 7, **dadurch gekennzeichnet, dass** die Eintrittskonzentration des Syntheserohgases an Kohlenstoffmonoxid bei Eintritt in die Hochtemperatur-CO-Konvertierung (2) im Bereich von 10 mol-% bis 16 mol-% liegt und die Austrittskonzentration des Synthesegasstroms an Kohlenstoffmonoxid bei Austritt aus der Hochtemperatur-CO-Konvertierung (2) und bei Eintritt in die Niedertemperatur-CO-Konvertierung (18, 20) jeweils Im Bereich von 3 mol-% bis 5 mol-% liegt.

9. Verfahren nach einem der Ansprüche 1 bis 8, **dadurch gekennzeichnet, dass** die Austrittskonzentration des Synthesegasstroms an Kohlenstoffmonoxid bei Austritt aus der Niedertemperatur-CO-Konvertierung (18, 20) bei weniger als 0,8 mol-%, vorzugsweise bei weniger als 0,6 mol-%, besonders bevorzugt bei weniger als 0,4 mol-% liegt.

10. Verfahren nach einem der Ansprüche 1 bis 9, **dadurch gekennzeichnet, dass** die Wassergas-Shift-Reaktion in der Hochtemperatur-CO-Konvertierung (2) In Gegenwart eines eisenhaltigen Katalysators erfolgt, welcher vorzugsweise neben Eisen Chrom und Kupfer enthält, welche in geringerer Menge im Katalysator enthalten sind als Eisen.

11. Verfahren nach einem der Ansprüche 1 bis 10, **dadurch gekennzeichnet, dass** die Wassergas-Shift-Reaktion in der Niedertemperatur-CO-Konvertierung (18, 20) in Gegenwart eines kupferhaltigen Katalysators erfolgt, welcher vorzugsweise neben Kupfer Zink und Aluminium enthält, welche bevorzugt in geringerer Menge im Katalysator enthalten sind als Kupfer.

12. Vorrichtung (1) zur Durchführung der Wassergas-Shift-Reaktion, insbesondere gemäß einem Verfahren nach einem der vorhergehenden Ansprüche, umfassend mindestens eine Einheit (2) zur Hochtemperatur-CO-Konvertierung,
mindestens eine erste und eine zweite Einheit (18, 20) zur Niedertemperatur-CO-Konvertierung, welche der Einheit (2) zur Hochtemperatur-CO-Konvertierung im Strömungsweg nachgeschaltet sind,
mindestens eine Einheit (10) zum Kühlen des der Einheit (2) zur Hochtemperatur CO-Konvertierung entnommenen Produktgasgemisches, **dadurch gekennzeichnet, dass** stromabwärts der Einheit (10) zum Kühlen im Leitungssystem eine Einrichtung zum Aufteilen des Produktgasgemisches in zwei Teilströme vorgesehen ist und dass eine erste Einheit (18) zur Niedertemperatur-CO-Konvertierung und eine zweite Einheit (20) zur Niedertemperatur-CO-Konvertierung parallel zueinander und stromabwärts der Einrichtung zum Aufteilen angeordnet sind, derart, dass sie nur von jeweils einem der beiden Teilströme durchströmbar sind.

13. Vorrichtung nach Anspruch 12, **dadurch gekennzeichnet, dass** diese eine Austrittsleitung (12) aus der Einheit (2) zur Hochtemperatur-CO-Konvertierung umfasst, welche sich aufteilt in mindestens zwei Leitungen, nämlich eine Leitung (14) für den ersten Teilstrom, welche zu der ersten Einheit (18) zur Niedertemperatur-CO-Konvertierung führt und eine Leitung (16) für den zweiten Teilstrom, welche zu der zweiten Einheit (20) zur Niedertemperatur-CO-Konvertierung führt.

14. Vorrichtung nach einem der Ansprüche 12 oder 13, **dadurch gekennzeichnet, dass** die zweite Einheit (20) zur Niedertemperatur-CO-Konvertierung nur einen Bruchteil der Größe und/oder der Anlagenkapazität der ersten Einheit (18) zur Niedertemperatur-CO-Konvertierung aufweist und/oder die zweite Einheit (20) zur Niedertemperatur-CO-Konvertierung nur einen Bruchteil der Katalysatormenge enthält, die die erste Einheit (18) zur Niedertemperatur-CO-Konvertierung enthält.

15. Vorrichtung nach Anspruch 14, **dadurch gekennzeichnet, dass** der Bruchteil der Größe und/oder der Anlagenkapazität und/oder der Katalysatormenge der zweiten Einheit (20) zur Niedertemperatur-CO-Konvertierung bezogen auf die erste Einheit (18) zur Niedertemperatur-CO-Konvertierung im Bereich des 0,15-fachen bis 0,40-fachen liegt.

16. Vorrichtung nach einem der Ansprüche 12 bis 15, **dadurch gekennzeichnet, dass** diese mindestens eine zweite Einheit (26) zum Kühlen des Produktgasgemisches aufweist, welche im Leitungsweg stromabwärts der ersten Einheit (18) zur Niedertemperatur-CO-Konvertierung angeordnet ist und nicht von dem aus der zweiten Einheit (20) zur Niedertemperatur-CO-Konvertierung austretenden Produktgasgemisch durchströmt wird und/oder diese mindestens eine dritte Einheit (28) zum Kühlen des Produktgasgemisches aufweist, welche im Leitungsweg stromabwärts der zweiten Einheit (20) zur Niedertemperatur-CO-Konvertierung angeordnet ist und nicht von dem aus der ersten Einheit (18) zur Nledertemperatur-CO-Konvertierung austretenden Produktgasgemisch durchströmt wird oder dass eine gemeinsame Einheit zum Kühlen des Produktgasgemisches sowohl für das aus der ersten Einheit (18) zur Niedertemperatur-CO-Konvertierung als auch für das aus der zweiten Einheit (20) zur Niedertemperatur-CO-Konvertierung austretende Produktgasgemisch stromabwärts von diesen beiden Einheiten (18, 20) vorgesehen ist.

17. Verwendung einer Vorrichtung zur Durchführung der Wassergas-Shift-Reaktion nach einem der Ansprüche 12 bis 16 in einem Verfahren zur Herstellung von Ammoniak.

## Claims

1. A process for performing the water gas shift reaction wherein raw synthesis gas is reacted in the presence of steam and at least one water gas shift catalyst to convert carbon monoxide into carbon dioxide and to form hydrogen, wherein the raw synthesis gas is initially passed through at least one unit for high-temperature CO conversion and subsequently, downstream thereof, passed through at least two units for low-temperature CO conversion, **characterized in that** after passing through the at least one unit for high-temperature CO conversion the synthesis gas stream is divided into at least two substreams, wherein the first substream is passed through a first unit (18) for low-temperature CO conversion and the second substream is passed through a second unit (20) for low-temperature CO conversion, wherein both units (18, 20) for low-temperature CO conversion are arranged in parallel relative to one another.

2. The process as claimed in claim 1, **characterized in that** after flowing through the at least one unit for high-temperature CO conversion (2) the synthesis gas stream is divided into two substreams which each comprise a proportion of 40% by volume to 60% by volume of the total synthesis gas stream after the high-temperature CO conversion, preferably into two substreams of approximately equal size which each comprise about 50% by volume of the total synthesis gas stream after the high-temperature CO conversion.

3. The process as claimed in claim 1, **characterized in that** after flowing through the at least one unit for high-temperature CO conversion (2) the synthesis gas stream is divided into two substreams of unequal size, wherein a first substream comprises a proportion of 95% by volume to 65% by volume, preferably 85% by volume to 65% by volume, of the total synthesis gas stream after the high-temperature CO conversion and a second substream comprises a proportion of 5% by volume to 35% by volume, preferably of 15% by volume to 35% by volume, of the total synthesis gas stream after the high-temperature CO conversion.

4. The process as claimed in any of claims 1 to 3, **characterized in that** the entry temperature of the raw synthesis gas into the high-temperature CO conversion (2) is in the range of 350-400°C.

5. The process as claimed in any of claims 1 to 4, **characterized in that** the maximum exit temperature of the synthesis gas stream from the high-temperature CO conversion (2) is in the range of 430-450°C.

6. The process as claimed in any of claims 1 to 5, **characterized in that** after exiting the high-temperature CO conversion (2) and before entering the two units (18, 20) for low-temperature CO conversion the synthesis gas stream is cooled by means of a cooling unit (10), preferably by means of a heat exchanger, so that the entry temperature upon entry into the two units (18, 20) for low-temperature CO conversion is in the range from 180°C to 220°C.

7. The process as claimed in any of claims 1 to 6, **characterized in that** the maximum exit temperature of the synthesis gas stream from the two units (18, 20) for low-temperature CO conversion is in the range from 220 to 240°C.

8. The process as claimed in any of claims 1 to 7, **characterized in that** the entry concentration of carbon monoxide in the raw synthesis gas upon entry into the high-temperature CO conversion (2) is in the range from 10 mol% to 16 mol% and the exit concentration of carbon monoxide in the synthesis gas stream upon exiting the high-temperature CO conversion (2) and upon entering the low-temperature CO conversion (18, 20) is in each case in the range from 3 mol% to 5 mol%.

9. The process as claimed in any of claims 1 to 8, **characterized in that** the exit concentration of carbon monoxide in the synthesis gas stream upon exiting the low-temperature CO conversion (18, 20) is less than 0.8 mol%, preferably less than 0.6 mol%, particularly preferably less than 0.4 mol%.

10. The process as claimed in any of claims 1 to 9, **characterized in that** the water gas shift reaction in the high-temperature CO conversion (2) is carried out in the presence of an iron-containing catalyst which preferably contains not only iron but also chromium and copper, where the latter are present in the catalyst in smaller amounts than iron.

11. The process as claimed in any of claims 1 to 10, **characterized in that** the water gas shift reaction in the low-temperature CO conversion (18, 20) is carried out in the presence of a copper-containing catalyst which preferably contains not only copper but also zinc and aluminum, where the latter are present in the catalyst in smaller amounts than copper.

12. An apparatus (1) for performing the water gas shift reaction, especially by a process as claimed in any of the preceding claims, comprising at least one unit (2) for high-temperature CO conversion,
at least one first and one second unit (18, 20) for low-temperature CO conversion which are connected downstream of the unit (2) for high-temperature CO conversion in the flow path,
at least one unit (10) for cooling the product gas mixture withdrawn from the unit (2) for high-temperature CO conversion, **characterized in that** provided in the conduit system downstream of the unit (10) for cooling is a means for dividing the product gas mixture into two substreams and **in that** a first unit (18) for low-temperature CO conversion and a second unit (20) for low-temperature CO conversion are arranged parallel relative to one another and downstream of the means for dividing in such a way that each of them is traversable by only one of the two substreams.

13. The apparatus as claimed in claim 12, **characterized in that** said apparatus comprises an exit conduit (12) from the unit (2) for high-temperature CO conversion which divides into at least two conduits, namely a conduit (14) for the first substream which leads to the first unit (18) for low-temperature CO conversion and a conduit (16) for the second substream which leads to the second unit (20) for low-temperature CO conversion.

14. The apparatus as claimed in claim 12 or 13, **characterized in that** the second unit (20) for low-temperature CO conversion has only a fraction of the size and/or the plant capacity of the first unit (18) for low-temperature CO conversion and/or the second unit (20) for low-temperature CO conversion contains only a fraction of the catalyst amount present in the first unit (18) for low-temperature CO conversion.

15. The apparatus as claimed in claim 14, **characterized in that** the fraction of the size and/or the plant capacity and/or the catalyst amount of the second unit (20) for low-temperature CO conversion relative to the first unit (18) for low-temperature CO conversion is in the range from 0.15 times to 0.4 times.

16. The apparatus as claimed in any of claims 12 to 15, **characterized in that** said apparatus comprises at least one second unit (26) for cooling the product gas mixture which in the flow path is arranged downstream of the first unit (18) for low-temperature CO conversion and does not have the product gas mixture exiting the second unit (20) for low-temperature CO conversion flow through it and/or said apparatus comprises at least one third unit (28) for cooling the product gas mixture which in the flow path is arranged downstream of the second unit (20) for low-temperature CO conversion and does not have the product gas mixture exiting the first unit (18) for low-temperature CO conversion flow through it or **in that** a common unit for cooling the product gas mixture both for the product gas mixture exiting the first unit (18) for low-temperature CO conversion and for the product gas mixture exiting the second unit (20) for low-temperature CO conversion is provided downstream of these two units (18, 20).

17. The use of an apparatus for performing the water gas shift reaction as claimed in any of claims 12 to 16 in a process for producing ammonia.

## Revendications

1. Procédé pour réaliser la réaction de transfert de gaz à l'eau dans lequel le gaz de synthèse brut réagit en présence de vapeur et d'au moins un catalyseur de transfert de gaz à l'eau pour convertir le monoxyde de carbone en dioxyde de carbone et former de l'hydrogène, dans lequel le gaz de synthèse brut passe d'abord par au moins une unité de conversion du CO à haute température et ensuite, en aval, par au moins deux unités de conversion du CO à basse température, **caractérisé par le fait qu'**après avoir traversé au moins une unité de conversion du CO à haute température, le flux de gaz de synthèse est divisé en au moins deux sous-flux, le premier sous-flux traversant une première unité (18) de conversion du CO à basse température et le second sous-flux traversant une seconde unité (20) de conversion du CO à basse température, les deux unités (18, 20) de conversion du CO à basse température étant disposées en parallèle l'une par rapport à l'autre.

2. Procédé selon la revendication 1, **caractérisé par le fait qu'**après avoir traversé l'au moins une unité de conversion du CO à haute température (2), le flux de gaz de synthèse est divisé en deux sous-flux qui comprennent chacun une proportion de 40 % en volume à 60 % en volume du flux total de gaz de synthèse après la conversion du CO à haute température, de préférence en deux sous-flux de taille à peu près égale qui comprennent chacun environ 50 % en volume du flux total de gaz de synthèse après la conversion du CO à haute température.

3. Procédé selon la revendication 1, **caractérisé par le fait qu'**après avoir traversé l'au moins une unité de conversion du CO à haute température (2), le flux de gaz de synthèse est divisé en deux sous-flux de taille inégale, dans lesquels un premier sous-flux comprend une proportion de 95 % en volume à 65 % en volume, de préférence de 85% en volume à 65% en volume, du flux total de gaz de synthèse après la conversion du CO à haute température et un second flux secondaire comprend une proportion de 5% en volume à 35% en volume, de préférence de 15% en volume à 35% en volume, du flux total de gaz de synthèse après la conversion du CO à haute température.

4. Procédé selon l'une des revendications 1 à 3, **caractérisé par le fait que** la température d'entrée du gaz de synthèse brut dans le convertisseur de CO à haute température (2) est comprise entre 350 et 400 °C.

5. Procédé selon l'une des revendications 1 à 4, **caractérisé par le fait que** la température maximale de sortie du flux de gaz de synthèse de la conversion de CO à haute température (2) est comprise entre 430 et 450 °C.

6. Procédé selon l'une quelconque des revendications 1 à 5, **caractérisé par le fait qu'**après avoir quitté la conversion de CO à haute température (2) et avant d'entrer dans les deux unités (18, 20) de conversion de CO à basse température, le flux de gaz de synthèse est refroidi au moyen d'une unité de refroidissement (10), de préférence au moyen d'un échangeur de chaleur, de sorte que la température d'entrée dans les deux unités (18, 20) de conversion de CO à basse température est comprise entre 180°C et 220°C.

7. Procédé selon l'une des revendications 1 à 6, **caractérisé par le fait que** la température maximale de sortie du flux de gaz de synthèse des deux unités (18, 20) de conversion du CO à basse température est comprise entre 220 et 240°C.

8. Procédé selon l'une des revendications 1 à 7, **caractérisé par le fait que** la concentration d'entrée du monoxyde de carbone dans le gaz de synthèse brut à l'entrée de l'unité de conversion du CO à haute température (2) est comprise entre 10 % et 16 % en moles et la concentration de sortie du monoxyde de carbone dans le flux de gaz de synthèse à la sortie de l'unité de conversion du CO à haute température (2) et à l'entrée de l'unité de conversion du CO à basse température (18, 20) est dans chaque cas comprise entre 3 % et 5 % en moles.

9. Procédé selon l'une des revendications 1 à 8, **caractérisé par le fait que** la concentration de sortie du monoxyde de carbone dans le flux de gaz de synthèse à la sortie du convertisseur de CO à basse température (18, 20) est inférieure à 0,8 % en moles, de préférence inférieure à 0,6 % en moles, de préférence encore inférieure à 0,4 % en moles.

10. Procédé selon l'une quelconque des revendications 1 à 9, **caractérisé par le fait que** la réaction de déplacement de l'eau vers le gaz dans la conversion du CO à haute température (2) est effectuée en présence d'un catalyseur contenant du fer qui, de préférence, contient non seulement du fer mais aussi du chrome et du cuivre, ces derniers étant présents dans le catalyseur en quantités moindres que le fer.

11. Procédé selon l'une des revendications 1 à 10, **caractérisé par le fait que** la réaction de déplacement de l'eau vers le gaz dans la conversion du CO à basse température (18, 20) est effectuée en présence d'un catalyseur contenant du cuivre qui, de préférence, contient non seulement du cuivre mais aussi du zinc et de l'aluminium, ces derniers étant présents dans le catalyseur en plus petites quantités que le cuivre.

12. Appareil (1) pour réaliser la réaction de water gas shift, notamment par un procédé selon l'une quelconque des revendications précédentes, comprenant au moins une unité (2) de conversion du CO à haute température,
au moins une première et une seconde unité (18, 20) de conversion du CO à basse température, connectées en aval de l'unité (2) de conversion du CO à haute température dans le circuit d'écoulement,
au moins une unité (10) de refroidissement du mélange de gaz produit prélevé dans l'unité (2) de conversion du CO à haute température, **caractérisée par le fait que** le système de conduites comporte, en aval de l'unité (10) de refroidissement, un moyen de diviser le mélange de gaz produit en deux flux secondaires et **par le fait qu'**une première unité (18) de conversion du CO à basse température et une seconde unité (20) de conversion du CO à basse température sont disposées parallèlement l'une par rapport à l'autre et en aval du moyen de division, de telle sorte que chacune d'elles ne peut être traversée que par un seul des deux flux secondaires.

13. Appareil selon la revendication 12, **caractérisé en ce que** ledit appareil comporte un conduit de sortie (12) de l'unité (2) de conversion de CO à haute température qui se divise en au moins deux conduits, à savoir un conduit (14) pour le premier sous-flux qui conduit à la première unité (18) de conversion de CO à basse température et un conduit (16) pour le second sous-flux qui conduit à la seconde unité (20) de conversion de CO à basse température.

14. Appareil selon la revendication 12 ou 13, **caractérisé par le fait que** la deuxième unité (20) de conversion du CO à basse température n'a qu'une fraction de la taille et/ou de la capacité de l'installation de la première unité (18) de conversion du CO à basse température et/ou la deuxième unité (20) de conversion du CO à basse température ne contient qu'une fraction de la quantité de catalyseur présente dans la première unité (18) de conversion du CO à basse température.

15. Appareil selon la revendication 14, **caractérisé par le fait que** la fraction de la taille et/ou de la capacité de l'installation et/ou de la quantité de catalyseur de la deuxième unité (20) de conversion du CO à basse température par rapport à la première unité (18) de conversion du CO à basse température est comprise entre 0,15 fois et 0,4 fois.

16. Appareil selon l'une des revendications 12 à 15, **caractérisé en ce que** ledit appareil comprend au moins une deuxième unité (26) pour refroidir le mélange de gaz produit qui, dans la voie d'écoulement, est disposée en aval de la première unité (18) pour la conversion de CO à basse température et qui n'est pas traversée par le mélange de gaz produit sortant de la deuxième unité (20) pour la conversion de CO à basse température et/ou ledit appareil comprend au moins une troisième unité (28) pour refroidir le mélange de gaz produit qui, dans la voie d'écoulement, est disposée en aval de la deuxième unité (20) pour la conversion de CO à basse température et qui n'est pas traversée par le mélange de gaz produit sortant de la deuxième unité (20) pour la conversion de CO à basse température, température et qui n'est pas traversée par le mélange de gaz produit sortant de la première unité (18) de conversion de CO à basse température ou **en ce qu'**une unité commune de refroidissement du mélange de gaz produit à la fois pour le mélange de gaz produit sortant de la première unité (18) de conversion de CO à basse température et pour le mélange de gaz produit sortant de la deuxième unité (20) de conversion de CO à basse température est prévue en aval de ces deux unités (18, 20).

17. Utilisation d'un appareil pour réaliser la réaction de water gas shift selon l'une des revendications 12 à 16 dans un procédé de production d'ammoniac.
